# EUROPÄISCHE PATENTSCHRIFT

(11) **EP 2 115 841 B1**
(45) Veröffentlichungstag und Bekanntmachung des Hinweises auf die Patenterteilung: **08.04.2015**
(21) Anmeldenummer: 07856768.2
(22) Anmeldetag: 15.12.2007
(51) Int. Cl.: H02G 5/02

(54) **TRAGVORRICHTUNG FÜR STROMSAMMELSCHIENEN**
CARRYING DEVICE FOR BUSBARS
DISPOSITIF PORTEUR POUR DES BARRES OMNIBUS

(30) Priorität: 26.01.2007 DE 102007003937
(43) Veröffentlichungstag der Anmeldung: 11.11.2009
(73) Patentinhaber: RITTAL GmbH & Co. KG, 35745 Herborn (DE)
(72) Erfinder: WAGENER, Hans, 35716 Dietzhölztal (DE)
(74) Vertreter: Tönhardt, Marion
(86) Internationale Anmeldenummer: PCT/EP2007/011030
(87) Internationale Veröffentlichungsnummer: WO 2008/089826

(56) Entgegenhaltungen:
- EP-A- 0 589 775
- CH-A- 486 754

## Beschreibung

Die Erfindung bezieht sich auf eine Tragvorrichtung für Stromsammelschienen mit mindestens einem auf einer Basiseinheit festlegbaren Halter, der eine Aufnahmeöffnung zum Durchführen mindestens einer Stromsammelschiene und eine Spannvorrichtung zu deren Festlegen aufweist, mit den Merkmalen des Oberbegriffs von Anspruch 1.

Eine derartige Tragvorrichtung ist aus der EP 0 589 775 A1 bekannt. Es ist jeweils ein in der Aufnahmeöffnung eingesetztes oder einsetzbares Aufnahmeteil vorgesehen, das mindestens eine an den Querschnitt einer Stromsammelschiene angepasste Aussparung aufweist, wobei die jeweilige Stromsammelschiene vermittels des Aufnahmeteils wahlweise in mindestens zwei um ihre Längsachse gedrehte Einbaulagen in dem Halter anordenbar ist, der aus einem Unterteil und einem an diesem lösbar anbringbaren und verspannbaren Oberteil besteht, zwischen denen die Aufnahmeöffnung ausgebildet ist. Das Aufnahmeteil ist in das Unterteil herausnehmbar einsetzbar und mit dem Oberteil festlegbar.

Eine ähnliche Tragvorrichtung für Stromsammelschienen ist aus der CH 486 754 A bekannt.

Eine Tragvorrichtung ist weiterhin in der DE 197 10 001 C2 gezeigt. Bei dieser bekannten Tragvorrichtung wird eine Stromsammelschiene mittels eines Halters auf einer Basiseinheit in Form einer im Querschnitt U-förmigen Tragschiene befestigt. Die Tragschiene ist ihrerseits über beidseitige separate Endstücke mit Rahmenschenkeln oder Montageschienen in einem Rahmengestell bzw. Schaltschrank angebracht, so dass sich über entsprechende Lochreihen der Rahmenschenkel bzw. Montageschienen und Verbindungspositionen des Halters auf der Tragschiene vielfältige variable Anordnungsmöglichkeiten für die Stromsammelschienen ergeben. Die Halter bestehen aus einem der Tragschiene zugewandten Steg und davon rechtwinklig abstehenden Seitenschenkeln, wodurch eine U-förmig umgrenzte Aufnahmeöffnung zum Einlegen einer im Querschnitt quadratischen Stromsammelschiene ergibt, die mittels eines auf den freien Stirnseiten der vorstehenden Seitenschenkel aufgeschraubten Steges in der Aufnahmeöffnung des aus Isolationsmaterial bestehenden Halters festgelegt wird. Auf der Tragschiene können mehrere Stromsammelschienen mittels in Längsrichtung der Tragschiene nebeneinander liegender Halter angeordnet werden.

Der Erfindung liegt die Aufgabe zugrunde, eine Tragvorrichtung der eingangs genannten Art bereit zu stellen, die erweiterte Anordnungsmöglichkeiten von Stromsammelschienen bei einfachem Aufbau und einfacher Montage bietet.

Diese Aufgabe wird mit den Merkmalen des Anspruches 1 gelöst. Erfindungsgemäß ist vorgesehen, dass das Unterteil und das Oberteil des Halters gegeneinander gerichtete Seitenschenkel besitzen und dass das Oberteil mit dem Unterteil auf beiden Seiten des Halters mittels einer durch die gegeneinander gerichteten Seitenschenkel geführten Schraubverbindung verspannt sind, wobei sich die Seitenschenkel des Unterteils und des Oberteils aufeinander abstützen.

Mit dieser Ausbildung des Halters ergibt sich zum einen eine Anpassungsmöglichkeit an Sammelschienen unterschiedlichen Querschnitts und zum anderen die Möglichkeit unterschiedlicher Ausrichtungen der mindestens einen in dem Aufnahmeteil auf-genommenen Stromsammelschiene. Damit wird die Anzahl möglicher Einbauvarianten von Stromsammelschienen eines Sammelschienensystems erheblich erweitert. Beispielsweise kann eine paketierte Gruppe von Stromsammelschienen rechteckförmigen Querschnitts mit ihren Flachseiten parallel oder senkrecht zur Einführrichtung in dem Halter angeordnet werden. Zum isolierten Einbau der Stromsammelschienen genügt es bereits, wenn das Aufnahmeteil aus Isolationsmaterial, insbesondere Kunststoff, besteht. Der Halter kann vollständig oder teilweise aus Metall bestehen oder seinerseits aus Isolationsmaterial, wie z. B. Kunststoff, ausgebildet sein.

Zur Flexibilität und einfachen Montage der Stromsammelschienen tragen die Massnahmen bei, dass das Aufnahmeteil entnehmbar als von dem Halter separates Teil ausgebildet ist und dass in dem Halter Halteelemente ausgebildet sind, mit denen an dem Aufnahmeteil ausgebildete, angepasste Haltegegenelemente zur eindeutigen Positionierung und haltend zusammenwirken. Beispielsweise wird dadurch ermöglicht, unterschiedliche Aufnahmeteile in den Halter einzusetzen und/oder ein Aufnahmeteil bereits vor der Montage in dem Halter an einer oder mehreren Stromsammelschienen festzulegen und danach zusammen mit dieser bzw. diesen in dem Halter auf einfache Weise positionsgenau einzusetzen. Die Halteelemente können zusätzlich als Führungselemente mit Führungsstrukturen und die Haltegegenelemente entsprechend als Führungsgegenelemente mit komplementären Führungsstrukturen ausgebildet sein.

Weitere für den Aufbau und die Handhabung vorteilhafte Massnahmen bestehen darin, dass der Halter aus einem Unterteil und einem an diesem lösbar anbringbaren und verspannbaren Oberteil besteht, zwischen denen die Aufnahmeöffnung ausgebildet ist, und dass das Aufnahmeteil in das Unterteil herausnehmbar einsetzbar und mit dem Oberteil festlegbar ist. Eine einfache, variable Montage mindestens einer Stromsammelschiene in dem Halter wird dadurch begünstigt, dass das Aufnahmeteil in den zwei bezüglich der Längsachse der Stromsammelschiene gedrehten Einbaulagen in der Aufnahmeöffnung anordenbar ist.

Zu einem einfachen Aufbau und einer einfachen Montage tragen des Weiteren die Massnahmen bei, dass das Aufnahmeteil aus zwei zusammensetzbaren Teilstücken besteht, zwischen denen mindestens eine Stromsammelschiene aufnehmbar ist und die mittels Verbindungselementen aneinander fixierbar sind.

Die Handhabung wird bei einfachem Aufbau auch dadurch begünstigt, dass die Verbindungselemente miteinander zusammenwirkende Steckzapfen und an diese angepasste Zapfenaufnahmen, Rastelemente und Rastgegenelemente oder eine Schraubverbindung oder eine Kombination aus mindestens zwei verschiedenen dieser Verbindungsarten aufweisen.

Ist vorgesehen, dass die mindestens eine Aussparung an eine Stromsammelschiene rechteckförmigen Querschnitts angepasst ist, werden vielfältige variable Anwendungsmöglichkeiten geboten, wobei die Stromsammelschienen einfach aufgebaut und handhabbar sind. Unterschiedlichen Querschnittsformen von Stromsammelschienen kann dabei einfach durch Anpassung der Aussparungen an die verschiedenen Querschnitte Rechnung getragen werden.

Ein einfacher Einsatz der Aufnahmeteile in verschiedenen Drehlagen wird dadurch erreicht, dass die Aufnahmeöffnung von einer umlaufenden Kontur quadratischer Form mit gerundeten Ecken umgrenzt ist und dass das jeweilige Aufnahmeteil eine entsprechend angepasste umlaufende Kontur aufweist. Die gerundeten Ecken ergeben eine erhöhte Stabilität.

Der Aufbau und die Montage werden auch dadurch begünstigt, dass ein Teil der Schraubverbindung dafür herangezogen ist, das Unterteil auf der Basiseinheit festzulegen.

Für die Montage in einem Rahmengestell oder einem Schaltschrank ist vorteilhaft vorgesehen, dass die Basiseinheit zur Aufnahme des Halters eine Tragschiene aufweist.

Die Erfindung wird nachfolgend anhand von Ausführungsbeispielen unter Bezugnahme auf die Zeichnungen näher erläutert. Es zeigen:
- Fig. 1: eine Tragvorrichtung mit einer Tragschiene und zwei Haltern, in denen Stromsammelschienen in verschiedenen Drehstellungen um ihre Längsachse aufgenommen sind, in perspektivischer Darstellung,
- Fig. 2: die Tragvorrichtung nach Fig. 1 in einer Ansicht von vorn,
- Fig. 3: einen Ausschnitt der Tragvorrichtung nach Fig. 1 mit einem geöffneten Halter in perspektivischer Darstellung, Fig. 4 einen Ausschnitt der Tragvorrichtung nach Fig. 1 mit einem zusammengesetzten, aber noch nicht verspannten Halter,
- Fig. 4: einen Ausschnitt der Tragvorrichtung nach Fig. 1 mit einem zusammengesetzten, aber noch nicht verspannten Halter,
- Fig. 5: ein Oberteil des Halters in perspektivischer Ansicht von schräg unten,
- Fig. 6: ein Ausschnitt der Tragvorrichtung nach Fig. 1 mit einem auf der Tragschiene montierten Unterteil des Halters in perspektivischer Ansicht von schräg oben,
- Fig. 7: einen Schraubbolzen des Halters,
- Fig. 8: eine in dem Unterteil des Halters eingegössene Metallbuchse,
- Fig. 9: ein in einem Halter einsetzbares Aufnahmeteil mit darin aufgenommenen Stromsammelschienen in teilweise geöffnetem Zustand in perspektivischer Ansicht,
- Fig. 10: ein Teilstück des Aufnahmeteils nach Fig. 9 in perspektivischer Ansicht,
- Fig. 11: ein Teilstück des Aufnahmeteils mit zum Teil teilweise eingesetzten Stromsammelschienen in einer Ansicht von vorn,
- Fig. 12: das Aufnahmeteil nach Fig. 9 mit eingesetzten Stromsammelschienen in teilweise geöffnetem Zustand in einer Ansicht von vorn und
- Fig. 13A bis 13D: verschiedene Einbausituationen der Tragvorrichtung.

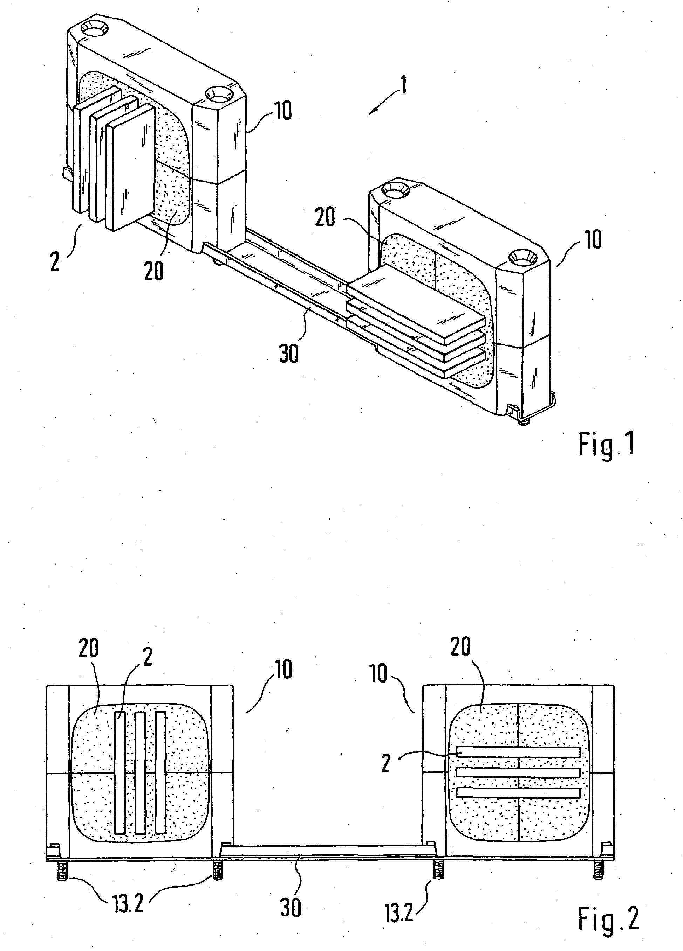

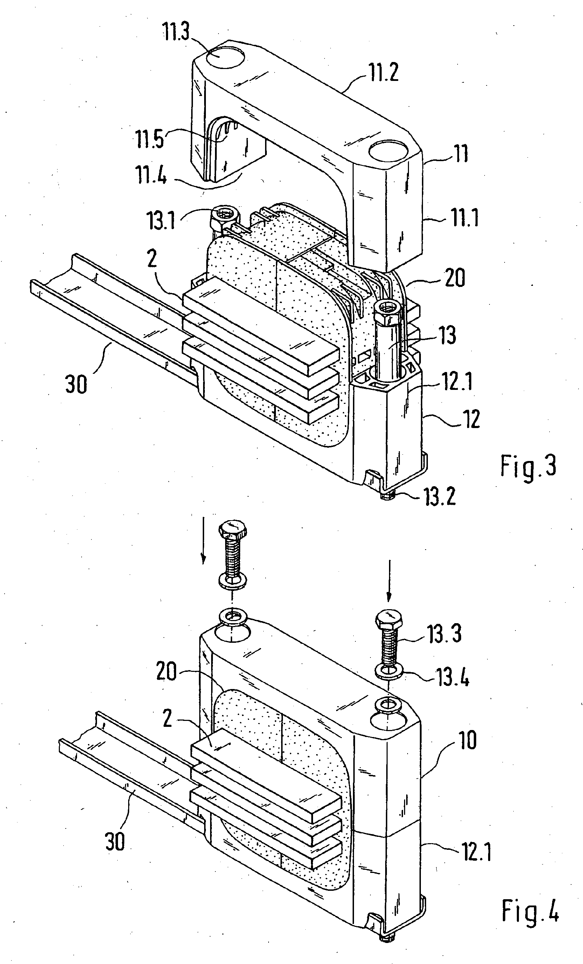

Fig. 1 zeigt ein Ausführungsbeispiel einer Tragvorrichtung 1 mit einer Basiseinheit in Form einer U-förmigen Tragschiene 30 und zwei darauf montierten Haltern 10, in denen jeweils ein Paket aus drei im Querschnitt rechteckförmigen Stromsammelschienen 2 aufgenommen ist. Zur Fixierung der Stromsammelschienen 2 sind in einer Aufnahmeöffnung 11.4 (vgl. Fig. 3) jeweilige Aufnahmeteile 20 eingesetzt, die zwischen einem auf der Tragschiene 30 montierten Unterteil 12 und einem darauf festgespannten Oberteil 11 festgelegt sind. Mittels des Aufnahmeteils 20 können die Stromsammelschienen 2 in verschiedenen Drehlagen bezüglich ihrer Längsachse in den Halter 10 eingesetzt und darin festgelegt werden, wie die Fig. 1 und 2 zeigen.

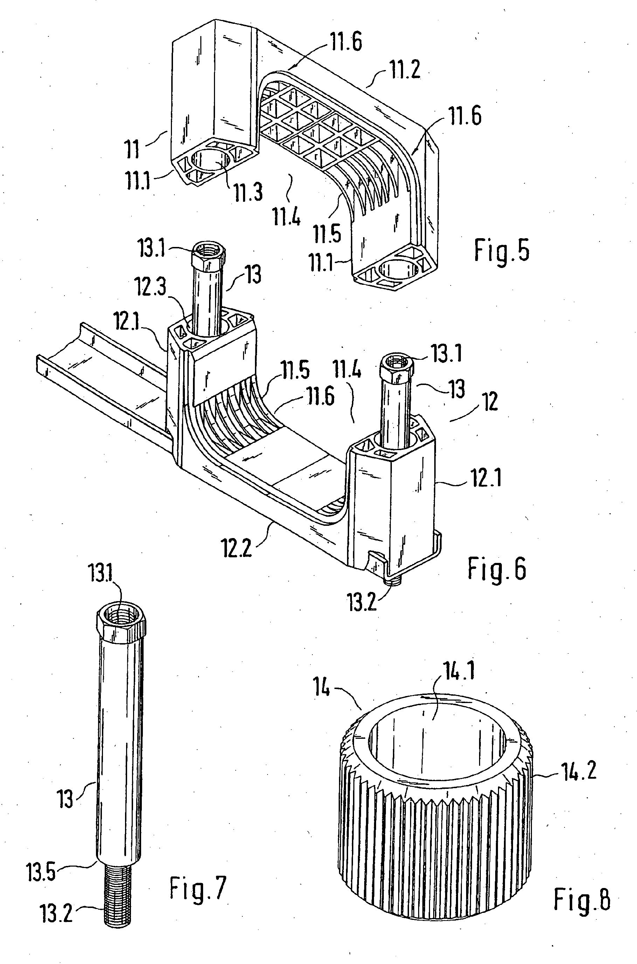

Die Montage des Unterteils 12 auf der Tragschiene 30 erfolgt, wie in der eingangs genannten DE 197 10 001 C2 gezeigt, mittels Schraubbolzen 13 (vgl. Fig. 7), die senkrecht zur Ebene der Tragschiene 30 durch Befestigungsöffnungen 12.3 in Seitenschenkeln 12.1 des Unterteils 12 geführt und mittels an den Haltebolzen 13 ausgebildeter Gewindezapfen 13.2 in Gewindebohrungen der Tragschiene 30 eingeschraubt werden. Die Gewindezapfen 13.2 besitzen gegenüber dem übrigen Teil des Schraubbolzens 13 einen geringeren Durchmesser und bilden einen Absatz 13.5, der mit einem zugeordneten Absatz in der Befestigungsöffnung 12.3 des betreffenden Seitenschenkels 12.1 des Unterteils 12 zusammenwirkt. Dazu ist in der Befestigungsöffnung 12.3 eine Metallbuchse 14 (s. Fig. 8) eingegossen und mittels einer haltenden Außenstruktur 14.2 befestigt, deren Innenzylinder 14.1 einen größeren Durchmesser besitzt als der Gewindezapfen 13.2, aber einen geringeren Durchmesser als der übrige Abschnitt des Schraubbolzens 13. Dadurch ergibt sich eine stabile Festlegung des Unterteils 12 an der Tragschiene 30, wobei die Metallbuchse 14 zur Abstützung auf der zugekehrten Fläche der Tragschiene 30 einerseits und an dem Absatz 13.5 andererseits dient, so dass das im Übrigen aus Isoliermaterial, insbesondere Kunststoff, bestehende Unterteil 12 nicht verspannt wird. Das Unterteil 12 besitzt auf der der Tragschiene 30 zugekehrten Seite seines Stegs 12.2 in Längsrichtung verlaufende seitliche Nuten, die an die seitlichen Schenkel der U-förmigen Tragschiene 30 angepasst sind und diese aufnehmen, wie Fig. 6 zeigt und auch aus den Fig. 1 und 2 ersichtlich.

Wie die Fig. 3, 4, 5, 6 und 7 weiterhin zeigen, weisen die Schraubbolzen in ihrem von dem Gewindezapfen 13.2 abgewandten Endabschnitt eine Gewindebohrung 13.1 auf, in die zum Festlegen des Oberteils 11 des Halters 10 Befestigungsschrauben 13.3 eindrehbar sind, die durch Befestigungsöffnungen 11.3 der an dem Oberteil 11 beidseitig vorstehenden Seitenschenkel 11.1 eingebracht sind und im montierten Zustand mit den Befestigungsöffnungen 12.3 in den Seitenschenkeln 12.1 des Unterteils 12 fluchten. Das Oberteil 11 wird mit dem Schraubkopf der Befestigungsschrauben 13.3 und unter diesen eingelegte Unterlegscheiben 13.4 an dem Unterteil 12 gehalten.

Das in die Aufnahmeöffnung 11.4 zwischen dem Unterteil 12 und dem Oberteil 11 des Halters 10 eingesetzte Aufnahmeteil 20 wird beim Verspannen des Oberteils 11 in dem Unterteil 12 in dem Halter 10 stabil festgelegt und auch gegen ein Herausschieben in Längsrichtung der Stromsammelschienen 2 gesichert, wobei in den gerundeten Eckbereichen der Aufnahmeöffnung 11.4 einerseits Halteelemente 11.5 und in den ebenfalls gerundeten Eckbereichen des Aufnahmeteils 12 andererseits Haltegegenelemente 28 ausgebildet sind, die auch eine Führungsfunktion zum leichten Einsetzen besitzen können. Die Rundungen 11.6 zwischen den Seitenschenkeln 11.1 und dem Steg 11.2 des Oberteils 11 und den Seitenschenkeln 12.1 und dem Steg 12.2 des Unterteils 12 ergeben eine hohe Stabilität durch Vermeidung einer Kerbwirkung. Insbesondere sind die Halte- bzw. Führungselemente 11.5 als zwischen Wandelementen ausgebildete Steckschlitze und umgekehrt die Halte- bzw. Führungsgegenelemente 28 als an die Steckschlitze angepasste Steckelemente mit dazwischen liegenden Schlitzen ausgebildet, so dass sich die Aufnahmeteile 20 leicht in das jeweilige Unterteil 12 einsetzen lassen und sich auch das Oberteil 11 leicht in eindeutiger Positionierung auf das Aufnahmeteil 20 aufsetzen lässt, wobei das Aufnahmeteil 20 auch in Längsrichtung der Stromsammelschienen 2 zwischen dem Unterteil 12 und dem Oberteil 11 im verspannten Zustand sicher gehalten ist.

Eine wesentliche Besonderheit besteht darin, dass die Aufnahmeöffnung 11.4 und das Aufnahmeteil 20 in ihrer Umfangskontur so aneinander angepasst sind, dass das Aufnahmeteil 20 bezüglich der Längsachse der Stromsammelschienen in zwei um 90° gedrehte und auch um jeweils 90° weiter gedrehte Drehstellungen einsetzen lässt, wie die Fig. 1 und 2 zeigen, wobei in dem jeweils rechten Halter 10 das Aufnahmeteil 20 in einer Stellung eingesetzt ist, in der die im Querschnitt rechteckförmigen Stromsammelschienen 2 parallel zur Ebene der Tragschiene 30 verlaufen, während in dem jeweils linken Halter 10 die Aufnahmeteile 20 in einer Stellung in den Halter 10 eingesetzt sind, in der die im Querschnitt rechteckförmigen Stromsammelschienen 2 senkrecht zur Ebene der Tragschiene 30 ausgerichtet sind.

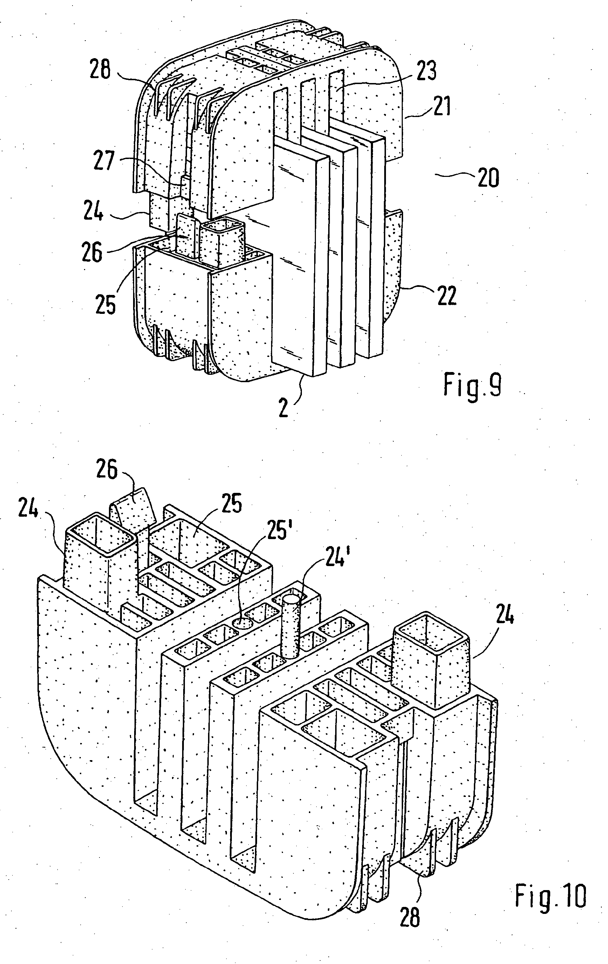

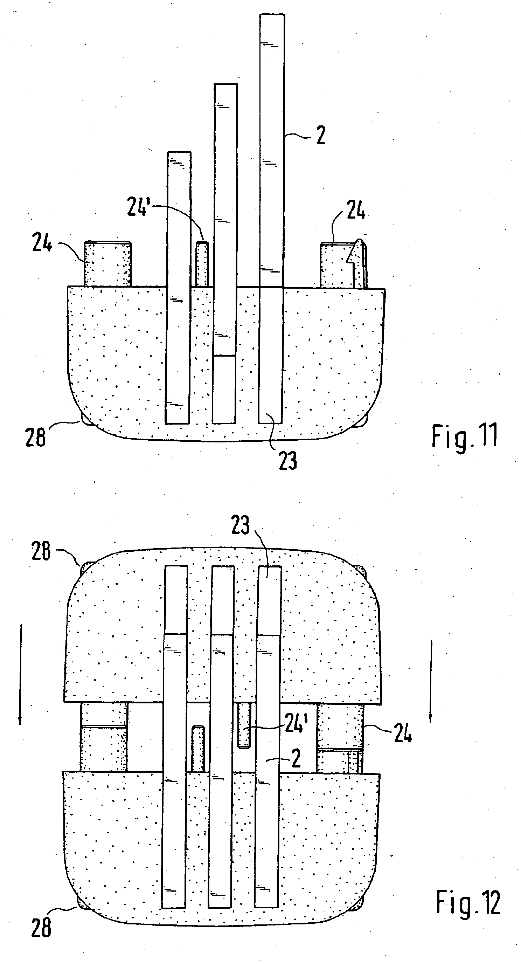

Zum Einsetzen der Stromsammelschienen 2 sind in den Aufnahmeteilen 20 jeweils an den Querschnitt der Stromsammelschienen angepasste Aussparungen 23, vorliegend also rechteckförmige Aussparungen eingebracht, wie insbesondere auch die Fig. 9, 10, 11 und 12 zeigen. Die Aussparungen 23 bestehen dabei in ihrer Querschnittskontur entsprechend den Stromsammelschienen 2 aus im Querschnitt rechteckförmigen Schlitzen, die parallel zueinander ausgerichtet sind und durch Zwischenwände voneinander getrennt sind. Eine Besonderheit besteht dabei darin, dass die Stärke der Zwischenwände der Stärke der Stromsammelschienen 2 entspricht, so dass sich zwischen den mit ihren Flachseiten parallel zueinander verlaufenden Stromsammelschienen 2 außerhalb der Aufnahmeteile 20 über die Länge der Stromsammelschienen 2 Zwischenräume entsprechender Breite wie die Stärke der Stromsammelschienen 2 ergeben. In die Zwischenräume können zur Verbindung mit weiteren, z. B. rechtwinklig zur Längsrichtung der Stromsammelschienen 2 verlaufenden weiteren Stromsammelschienen 2 Schienenabschnitte gleicher Stärke wie die Stromsammelschienen eingeführt und festgelegt werden. Auch L- oder Z-förmig abgekantete flache Verbindungsstücke können in diese Zwischenräume eingesetzt werden, so dass die Aufnahmeteile 20 ein durchgängiges System von Stromsammelschienen mit zuverlässigen stromleitenden Verbindungen vorteilhaft ergänzen. Durch die Schlitze zwischen den Stromsammelschienen werden zudem Strömungskanäle für eine gute Ventilation gebildet, wobei z. B. ein in einem Schaltschrank erzeugter Kamineffekt genutzt werden kann.

Wie die Fig. 9 bis 12 weiterhin zeigen, sind die Aufnahmeteile 20 aus zwei Teilstücken 21, 22 aufgebaut, die vorteilhaft gleich ausgebildet sind und mittels Rastelementen 26 und Rastgegenelementen 27 oder alternativ Schraubverbindungen lösbar miteinander verbindbar sind. Des Weiteren sind zum einfachen Zusammensetzen der beiden Teilstücke 21, 22 in der Trennebene der beiden Teilstücke einerseits Steckzapfen 24 und andererseits daran angepasste Zapfenaufnahmen 25 eingeformt und zur Stabilisierung und Vereinfachung der Montage können weitere Steckzapfen 24' und daran angepasste weitere Zapfenaufnahmen 25' an- bzw. eingeformt sein.

Bei dem gezeigten Ausführungsbeispiel weist das jeweilige, im Querschnitt rechteckförmige Teilstück 21 bzw. 22 im Bereich seiner einen Schmalseite ein Rastelement 26 in Form eines Rastfingers mit einer in Einführrichtung verlaufenden Rastschräge und einem entgegen der Einführrichtung wirkenden Rastabsatz auf, während es im Bereich seiner anderen Schmalseite als Rastgegenelement 27 eine seitliche Vertiefung mit einem Rastelement aufweist, das mit dem Rastabsatz zusammenwirkt. In den sich diagonal gegenüberliegenden Eckbereichen der Trennebene sind im Querschnitt rechteckförmig ausgebildete Steckzapfen 24 und im Bereich der anderen beiden sich diagonal gegenüberliegenden Eckbereiche der Trennebene sind die entsprechend an die Steckzapfen 24 angepassten Zapfenaufnahmen 25 als Vertiefungen ausgebildet. In der Mitte einer Trennwand zwischen den Aussparungen 23 ist ein im Querschnitt runder Steckzapfen als weiterer Steckzapfen 24' und im Bereich der Mitte der anderen Trennwand ist als weitere Zapfenaufnahme 25' eine daran angepasste runde Vertiefung eingebracht. Mit dieser Ausbildung sind die beiden gleich ausgebildeten Teilstücke 21, 22 in einer um 180° bezüglich der Längsachse einer eingesetzten Stromsammelschiene gedrehten Stellung aufeinander steckbar und miteinander verrastbar. Die Teilstücke 21, 22 können damit auf einfache Weise z. B. auf ein Paket von drei parallel zueinander beabstandeten, in Querschnitt rechteckförmigen Stromsammelschienen 2 auf deren sich gegenüberliegenden Schmalseiten eingeführt und die Stromsammelschienen 2 zwischen sich aufnehmend miteinander verbunden werden. Dabei ist die Verbindung derart, dass die aufgesetzten Aufnahmeteile 20 auf dem Paket der Stromsammelschienen 2 erforderlichenfalls in Längsrichtung noch verschoben werden können. Das Aufnahmeteil 20 bzw. mehrere in Längsrichtung der Stromsammelschienen 2 beabstandete Aufnahmeteile 20 können somit auf einfache Weise in entsprechende Halter 10 eingesetzt und in diesen in der vorstehend beschriebenen Weise festgespannt werden. Dabei lassen sich die Stromsammelschienen leicht in den beiden um 90° um ihre Längsachse gedrehten Lagen einbauen.

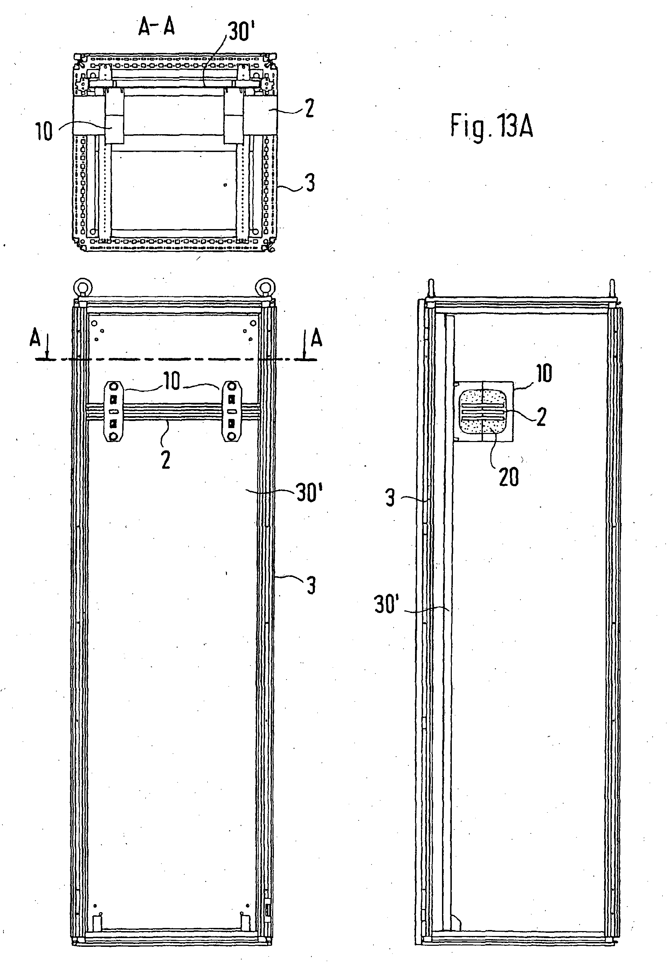

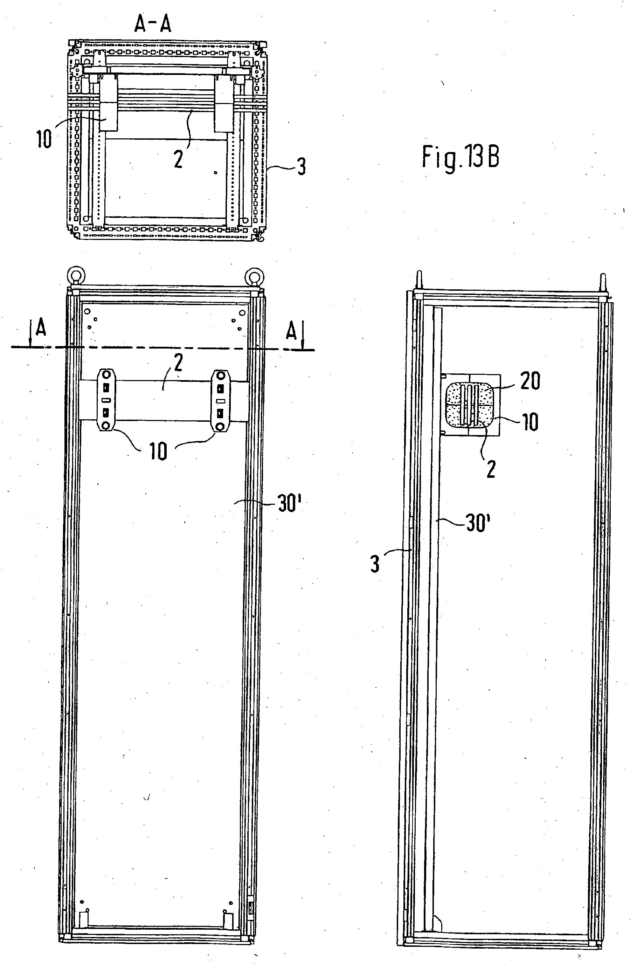

Die Fig. 13A bis 13D zeigen verschiedene Einbausituationen der Tragvorrichtung in einem Rahmengestell 3 eines Schaltschrankes oder eines Racks. Bei der Ausführung nach den Fig. 13A und 13B ist die Tragvorrichtung im vertikalen Bereich des Rahmengestells 3 angeordnet, wobei zwei Halter 10 auf einer Basiseinheit in Form einer Montageplatte 30' montiert sind und das Aufnahmeteil 20 mit horizontaler Ausrichtung der flachen Seiten der horizontal verlaufenden Stromsammelschienen 2 in dem Halter 10 eingesetzt ist. Dabei zeigen die obere linke Fig. eine Draufsicht auf das Rahmengestell mit der Tragvorrichtung entlang einer Schnittebene A-A, die linke untere Darstellung eine Ansicht des Rahmengestells 3 mit der Tragrichtung von vorn und die rechte Darstellung eine Ansicht des Rahmengestells 3 von einer Seite auf die Stirnseite der Stromsammelschienen 2. Bei der Darstellung in Fig. 13B sind gegenüber der Fig. 13A die Aufnahmeteile 20 mit den Stromsammelschienen 2 derart in die Halter 10 eingesetzt, dass die horizontal verlaufenden Stromsammelschienen 2 mit ihren flachen Seiten senkrecht orientiert sind.

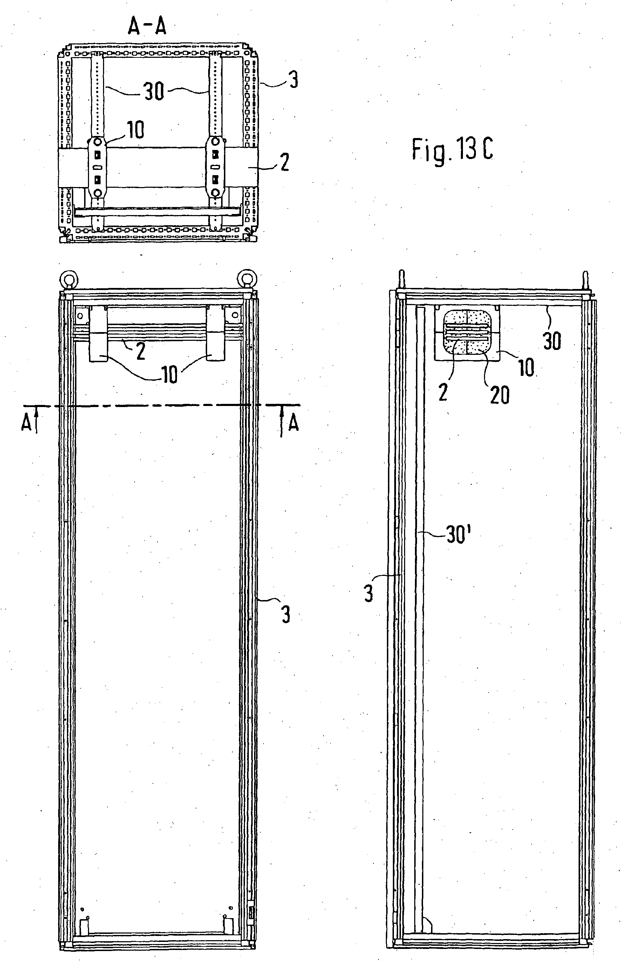

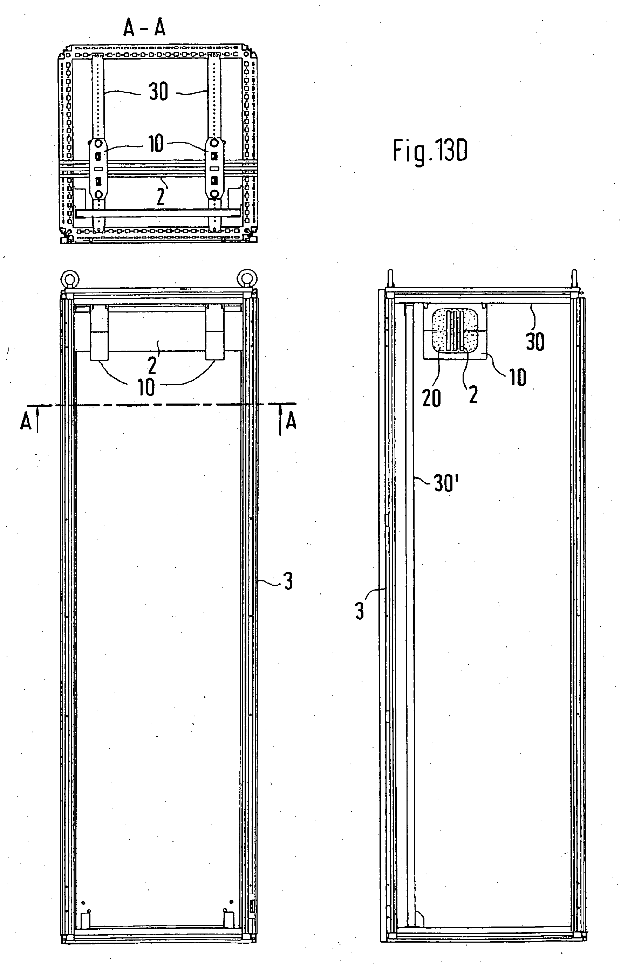

Bei der Ausführung nach Fig. 13C verlaufen die Stromsammelschienen 2 ebenfalls horizontal, sind jedoch mittels horizontaler Tragschienen 30 im Dachbereich des Rahmengestells 3 montiert, wobei zwei Halter 10 verwendet sind, die auf der Unterseite der Tragschienen 30 nach unten abstehend montiert sind. Dabei sind die Aufnahmeteile 20 mit den Stromsammelschienen 2 so in die Halter 10 eingesetzt, dass die Stromsammelschienen 2 mit ihren flachen Seiten horizontal ausgerichtet sind. Die obere linke Darstellung zeigt dabei eine Ansicht des Rahmengestells 3 mit der Tragvorrichtung von unten, die linke untere Darstellung eine Darstellung mit einer Ansicht des Rahmengestells 3 und der Tragvorrichtung von vorn und die rechte Darstellung eine Ansicht des Rahmengestells 3 mit der Tragvorrichtung von der Seite. Die Ausführung nach Fig. 13D zeigt gegenüber der Fig. 13C einen Einsatz der Aufnahmeteile 20 mit den Stromsammelschienen 2 in die Halter 10, bei dem die flache Seite der Stromsammelschienen 2 vertikal ausgerichtet ist. Ansonsten entspricht dieser Aufbau der Fig. 13C.

Auch können weitere Drehstellungen für weitere Einbaulagen vorgesehen sein. Weitere Einbaulagen können auch dadurch ermöglicht werden, dass die Aussparungen 23 außermittig in dem Aufnahmeteil 20 angeordnet sind. Mit Hilfe unterschiedlicher Aufnahmeteile 20 ist die Aufnahme von Stromsammelschienen anderer Querschnittsformen möglich. Auch ist eine Ausbildung möglich, bei der das Aufnahmeteil in zwei um mindestens eine quer zur Längsachse der Stromsammelschiene (um 180°) gedrehten Einbaulagen einsetzbar ist.

## Patentansprüche

1. Tragvorrichtung für Stromsammelschienen mit mindestens einem auf einer Basiseinheit festlegbaren Halter (10), der eine Aufnahmeöffnung (11.4) zum Durchführen mindestens einer Stromsammelschiene (2) und eine Spannvorrichtung zu deren Festlegen aufweist, wobei jeweils ein in der Aufnahmeöffnung (11.4) eingesetztes oder einsetzbares Aufnahmeteil (20) vorgesehen ist, das mindestens eine an den Querschnitt einer Stromsammelschiene (2) angepasste Aussparung (23) aufweist, und wobei die jeweilige Stromsammelschiene (2) vermittels des Aufnahmeteils (20) wahlweise in mindestens zwei um ihre Längsachse gedrehte Einbaulagen in dem Halter (10) anordenbar ist, der aus einem Unterteil (12) und einem an diesem lösbar anbringbaren und verspannbaren Oberteil (11) besteht, zwischen denen die Aufnahmeöffnung (11.4) ausgebildet ist, und wobei das Aufnahmeteil (20) in das Unterteil (12) herausnehmbar einsetzbar und mit dem Oberteil (11) festlegbar ist,
**dadurch gekennzeichnet, dass** das Unterteil (12) und das Oberteil (11) des Halters (10) gegeneinander gerichtete Seitenschenkel (11.1 ; 12.1) besitzen und dass das Oberteil (11) mit dem Unterteil (12) auf beiden Seiten des Halters (10) mittels einer durch die gegeneinander gerichteten Seitenschenkel (11.1; 12.1) geführten Schraubverbindung verspannt sind, wobei sich die Seitenschenkel (11.1 ; 12.1) des Unterteils (12) und des Oberteils (11) aufeinander abstützen.

2. Tragvorrichtung nach Anspruch 1, **dadurch gekennzeichnet, dass** das Aufnahmeteil (20) entnehmbar als von dem Halter (10) separates Teil ausgebildet ist und dass in dem Halter (10) Halteelemente (11.5) ausgebildet sind, mit denen an dem Aufnahmeteil (20) ausgebildete, angepasste Haltegegenelemente (28) zur eindeutigen Positionierung und haltend zusammenwirken.

3. Tragvorrichtung nach Anspruch 1 oder 2, **dadurch gekennzeichnet, dass** das Aufnahmeteil (20) in den zwei bezüglich der Längsachse der Stromsammelschiene (2) gedrehten Einbaulagen in der Aufnahmeöffnung (11.4) anordenbar ist.

4. Tragvorrichtung nach einem der Ansprüche 1 bis 3, **dadurch gekennzeichnet, dass** das Aufnahmeteil (20) aus zwei zusammensetzbaren Teilstücken (21 22) besteht, zwischen denen mindestens eine Stromsammelschiene (2) aufnehmbar ist und die mittels Verbindungselementen aneinander fixierbar sind.

5. Tragvorrichtung nach Anspruch 4, **dadurch gekennzeichnet, dass** die Verbindungselemente miteinander zusammenwirkende Steckzapfen (24) und an diese angepasste Zapfenaufnahmen (25), Rastelemente (26) und Rastgegenelemente (27) oder eine Schraubverbindung oder eine Kombination aus mindestens zwei verschiedenen dieser Verbindungsarten aufweisen.

6. Tragvorrichtung nach einem der Ansprüche 1 bis 5, **dadurch gekennzeichnet, dass** die mindestens eine Aussparung (23) an eine Stromsammelschiene (2) rechteckförmigen Querschnitts angepasst ist.

7. Tragvorrichtung nach einem der Ansprüche 1 bis 6, **dadurch gekennzeichnet, dass** die Aufnahmeöffnung (11.4) von einer umlaufenden Kontur quadratischer Form mit gerundeten Ecken umgrenzt ist und dass das jeweilige Aufnahmeteil (20) eine entsprechend angepasste umlaufende Kontur aufweist.

8. Tragvorrichtung nach Anspruch 1, **dadurch gekennzeichnet, dass** ein Teil der Schraubverbindung dafür herangezogen ist, das Unterteil (12) auf der Basiseinheit (10) festzulegen.

9. Tragvorrichtung nach einem der Ansprüche 1 bis 8, **dadurch gekennzeichnet, dass** die Basiseinheit zur Aufnahme des Halters (10) eine Tragschiene (30) oder eine Montageplatte (30') aufweist.

## Claims

1. A supporting device for busbars, having at least one holding device (10), which can be affixed to a base unit and having a receiving opening (11.4) for feeding through at least one busbar (2) and having a clamping device for affixing it in position, wherein a receiving component (20) is provided which is inserted or insertable into the receiving opening (11.4) and having at least one opening (23) adapted to the cross section of the busbar (2), and the receiving component (20) selectively positioning the respective busbar (2) in the holding device (10) in at least two installation positions that are rotated in relation to each other around a longitudinal axis, the holding device consisting of a bottom piece (12) and a top piece (11) that can be detachably placed onto the bottom piece and clamped to it, between which the receiving opening (11.4) is formed and wherein the receiving component (20) can be removably inserted into the bottom piece (12) and fixed in position by the top piece (11),
**characterized in that** the bottom piece (12) and the top piece (11) of the holding device (10) have side legs (11.1; 12.1) oriented toward each other and the top piece (11) is clamped to the bottom piece (12) on both sides of the holding device (10) by a screw connection passing through the opposing side legs (11.1; 12.1), with the side legs (11.1; 12.1) of the bottom piece (12) and the top piece (11) supported against each other.

2. The supporting device of claim 1, **characterized in that** the receiving component (20) is formed as a separate part that can be removed from the holding device (10) and the holding device (10) contains holding elements (11.5) that cooperate in a holding fashion with matching counterpart holding elements (28) on the receiving component (20) in order to produce a uniquely defined positioning.

3. The supporting device of claim 1 or 2, **characterized in that** the receiving component (20) can be positioned in the receiving opening (11.4) in two installation positions rotated in relation to each other around the longitudinal axis of the busbar.

4. The supporting device of any of claims 1 to 3, **characterized in that** the receiving component (20) is of two subcomponents (21, 22) that can be assembled to each other, can accommodate at least one busbar (2) between themselves, and can be attached to each other by connecting elements.

5. The supporting device of claim 4, **characterized in that** the connecting elements have cooperating insertion pins (24) and adapted pin sockets (25), detent elements (26) and counterpart detent elements (27), a screw connection, or a combination of at least two of these different connection types.

6. The supporting device of any of claims 1 to 5, **characterized in that** the at least one opening (23) is adapted to a busbar (2) with a rectangular cross section.

7. The supporting device of any of claims 1 to 6, **characterized in that** the receiving opening (11.4) is surrounded by a circumferential contour which is square in shape with rounded corners, and the respective receiving component (20) has a correspondingly adapted circumferential contour.

8. The supporting device of claim 1, **characterized in that** a part of the screw connection affixes the bottom piece (12) to the base unit (10).

9. The supporting device of any of claims 1 to 8, **characterized in that** the base unit has a supporting rail (30) or a mounting plate (30') for accommodating the holding device (10).

## Revendications

1. Dispositif de support pour rails collecteurs de courant comprenant au moins un support (10) pouvant être fixé sur une unité de base qui présente une ouverture de réception (11.4) destinée à faire passer au moins un rail collecteur de courant (2) et un dispositif de tension destiné à sa fixation, étant entendu qu'il est prévu respectivement une pièce de réception (20) insérée ou pouvant être insérée dans l'ouverture de réception (11.4) qui présente au moins un évidement (23) adapté à la section d'un rail collecteur de courant (2), étant entendu que le rail collecteur de courant (2) respectif peut être agencé dans le support (10) au moyen de la pièce de réception (20), au choix, dans au moins deux positions de montage ayant une rotation différente de leur axe longitudinal, le support (10) étant constitué d'une partie inférieure (12) et d'une partie supérieure (11) pouvant être installée et serrée sur la première de façon détachable, entre lesquelles l'ouverture de réception (11.4) est formée, et étant entendu que la pièce de réception (20) peut être insérée dans la partie inférieure (12) de façon à pouvoir être enlevée et peut être fixée avec la partie supérieure (11),
**caractérisé en ce que** la partie inférieure (12) et la partie supérieure (11) du support (10) possèdent des montants latéraux (11.1 ; 12.1) dirigés l'un contre l'autre et **en ce que** la partie supérieure (11) est serrée avec la partie inférieure (12) sur les deux côtés du support (10) au moyen d'un raccord vissé passant au travers des montants latéraux (11.1 ; 12.1) dirigés l'un contre l'autre, étant entendu que les montants latéraux (11.1 ; 12.1) de la partie inférieure (12) et de la partie supérieure (11) prennent appui l'un sur l'autre.

2. Dispositif de support selon la revendication 1, **caractérisé en ce que** la pièce de réception (20) est réalisée de façon amovible comme pièce séparée du support (10) et **en ce que** dans le support sont réalisés des éléments de support (11.5) avec lesquels des contre-éléments de support (28) adaptés, réalisés sur la pièce de réception (20), coopèrent en vue d'un positionnement clair et d'un maintien.

3. Dispositif de support selon la revendication 1 ou 2, **caractérisé en ce que** la pièce de réception (20) peut être agencée dans l'ouverture de réception (11.4) dans les deux positions de montage ayant une rotation différente par rapport à l'axe longitudinal du rail collecteur de courant (2).

4. Dispositif de support selon l'une des revendications 1 à 3, **caractérisé en ce que** la pièce de réception (20) est constituée de deux éléments partiels (21, 22) pouvant être assemblés, entre lesquels au moins un rail collecteur de courant (2) peut être reçu et qui peuvent être fixés l'un à l'autre au moyen d'éléments de raccordement.

5. Dispositif de support selon la revendication 4, **caractérisé en ce que** les éléments de raccordement présentent des tenons enfichables (24) coopérant entre eux et des logements de tenons (25) adaptés à ceux-ci, des éléments de crantage (26) et des contre-éléments de crantage (27), ou un raccord vissé, ou une combinaison d'au moins deux différents de ces types de raccordement.

6. Dispositif de support selon l'une des revendications 1 à 5, **caractérisé en ce que** l'au moins un évidement (23) est adapté à un rail collecteur de courant (2) de section rectangulaire.

7. Dispositif de support selon l'une des revendications 1 à 6, **caractérisé en ce que** l'ouverture de réception (11.4) est délimitée par un contour périphérique de forme carrée ayant des angles arrondis et **en ce que** la pièce de réception (20) respective présente un contour périphérique adapté correspondant.

8. Dispositif de support selon la revendication 1, **caractérisé en ce qu'**une pièce du raccord vissé est utilisée pour fixer la partie inférieure (12) sur l'unité de base (10).

9. Dispositif de support selon l'une des revendications 1 à 8, **caractérisé en ce que** l'unité de base présente un rail de support (30) ou une plaque de montage (30') afin de recevoir le support (10).
